# EUROPEAN PATENT APPLICATION

(11) **EP 0 741 441 A2**
(43) Date of publication of application: **06.11.1996**
(21) Application number: 96106755.0
(22) Date of filing: 29.04.1996
(51) Int. Cl.: H02J 7/00, B62M 23/02

(54) **A charging device for a battery**

(30) Priority: 28.04.1995 JP 106076/95
(71) Applicant: YAMAHA HATSUDOKI KABUSHIKI KAISHA, Iwata-shi Shizuoka-ken, 438 (JP)
(72) Inventor: Van Trigg, Robert, c/o Yamaha Motor Europe N.V., 1119 NC Schiphol-Rijk (NL); Kuijpers, Jeroen, N.M., c/o Yamaha Motor Europe NV, 1119 NC Schiphol-Rijk (NL)
(74) Representative: Grünecker, Kinkeldey, Stockmair & Schwanhäusser Anwaltssozietät

(57) **Abstract**

A charging device is provided for charging a battery of an electrically driven two wheel vehicle, in particular an electrical power assisted bicycle. The device comprises a stationary charger having a grasping section for holding said vehicle and a charging section for charging said battery.

## Description

The present invention relates to a charging device for a battery of an electrically driven two wheel vehicle, in particular an electrical power assisted bicycle.

In a case of a vehicle, such as an electric bicycle, which poses a difficulty in charging a battery thereof during running, the charging of the battery is repeatedly performed during non-use stage with a charger connected, for example, to a home electric power source. The charging of the battery may be carried out after separation of the battery from the vehicle main body or while retaining the battery on the vehicle main body. In either case, there involves merits and demerits depending on the place and environment where the charging is performed. Thus, the conventional construction has been generally such that both types of charging may be adopted.

With the conventional battery charging device, it has been necessary to use an extension cord in order to connect the battery and the charger in charging the battery retained on the vehicle main body body. This poses a problem that the cord disturbs the operation depending on the condition of the charging place. Further, there is a fear that the cord and the charger may encounter a trouble when the vehicle is felled due to, for example, a blow of wind.

When the battery is charged after having been separated from the vehicle main body, the above problems are not caused. However, it is necessary to carry out the troublesome work for electrically and mechanically attaching and detaching the heavy battery every time the charging is conducted.

Accordingly, it is an objective of the present invention to provide a charging device for a battery as indicated above which facilitates a reliable and safe charging and simultaneously is easy to handle.

According to the invention, this objective is solved for a charging device as indicated above by a stationary charger having a grasping section for holding said vehicle and a charging section for charging said battery.

The operation and construction of this device is further enhanced when said grasping section and said charging section are integral.

According to another embodiment of the invention, said charging arm is pivotably linked to a charger main body connected to a stationary mounting bracket.

When said grasping section is provided with a locking mechanism for locking said vehicle being held by said grasping section the position of this vehicle is secured.

Other preferred embodiments of the present invention are laid down in further dependent claims.

With the charging device according to the present invention, the charging is performed under the conditions in which the electric vehicle is positioned at a location where the charger is disposed, in which a portion of the vehicle is held with the grasping section of the charging arm, and in which the power supplying member is electrically coupled with the power receiving member.

Thus, according to the present invention, since the charger main body having the charging arm provided with the grasping section is installed in a parking area and since the charger main body is electrically coupled with the battery upon holding the vehicle main body with the grasping section of the charging arm, the battery can be charged while keeping the battery mounted on the vehicle without requiring a disturbing extension cord and without requiring troublesome attaching and detaching works. Further, during the charging, the vehicle body is held with the charging arm and is mechanically fixed, so that damages by felling can be prevented.

According to a further embodiment of the invention, since the power receiving terminal on the vehicle side is engaged and electrically connected with the power receiving supplying terminal on the charger side when the vehicle is held, both the electrical connection and the mechanical fixing can be achieved simultaneously.

According to another embodiment of the invention, since the coil on the power receiving side on the vehicle is disposed opposite the coil on the power supplying side on the charger with a space being defined therebetween and since the charging electric power is supplied by a magnetic coupling therebetween without direct contact therebetween, problems, such as fouling of a contact portion and failure of contact due to rust which would be apt to be caused in the case of an electrical connection by direct contact, can be avoided.

According to a still further embodiment of the invention, since the charging arm is capable of being rotated between a charging position and an accommodated position, the charging arm can be positioned at a vertical wall side during non-use, so that the problem of obstacle by the charging arm can be avoided.

According to another further embodiment of the invention, since the charging is initiated when the locking mechanism is actuated to a locking position, theft or mischief can be prevented and the forgetting to charge can be avoided.

In the following, the present invention is explained in greater detail with respect to several embodiments thereof in conjunction with the accompanying drawings, wherein:
Fig. 1 is a schematic structural view explanatory of a charging device for an electric bicycle according to one embodiment of the present invention.
Fig. 2 is a perspective of the charging device of the above embodiment.
Fig. 3 is a schematic view showing the state of the charging device of the above embodiment during use.
Fig. 4 is a side view of the electric bicycle of the above embodiment.
Fig. 5 is a schematic structural view showing a modified example of the device of the above embodiment.

Embodiments of the present invention will be described below with reference to the accompanying drawings.

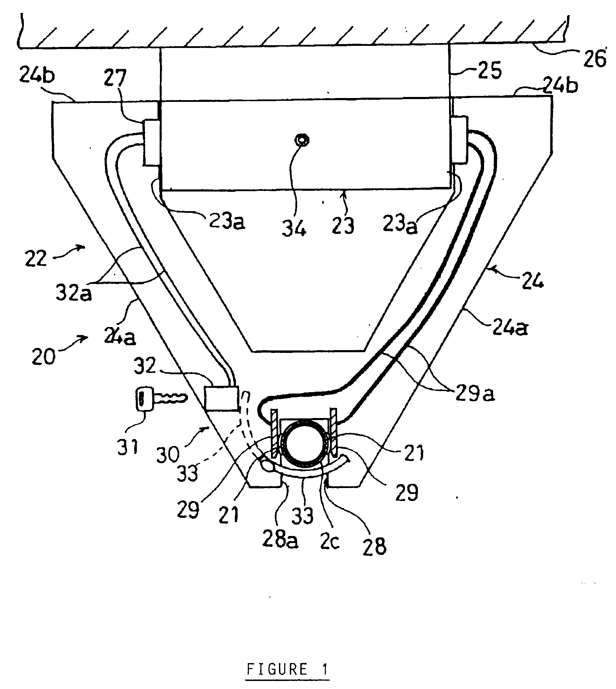

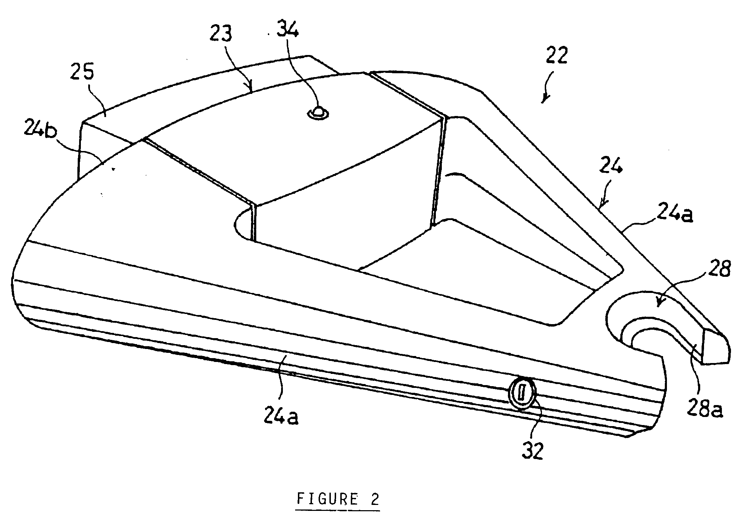

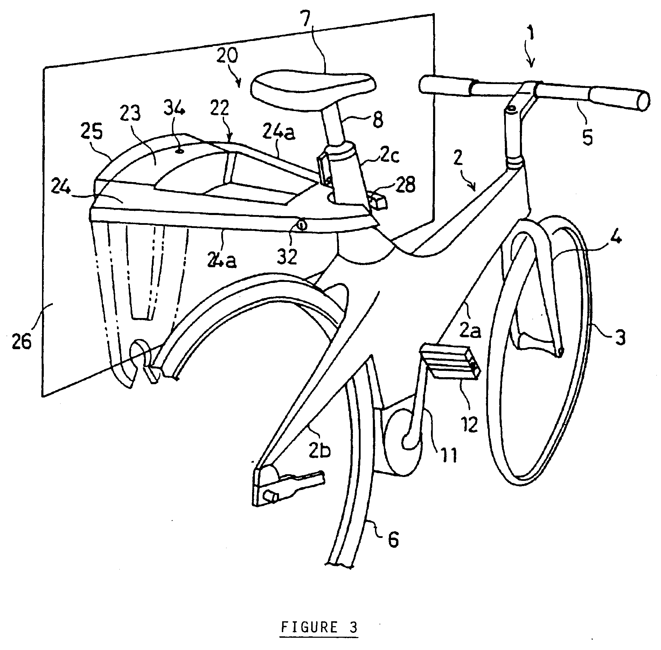

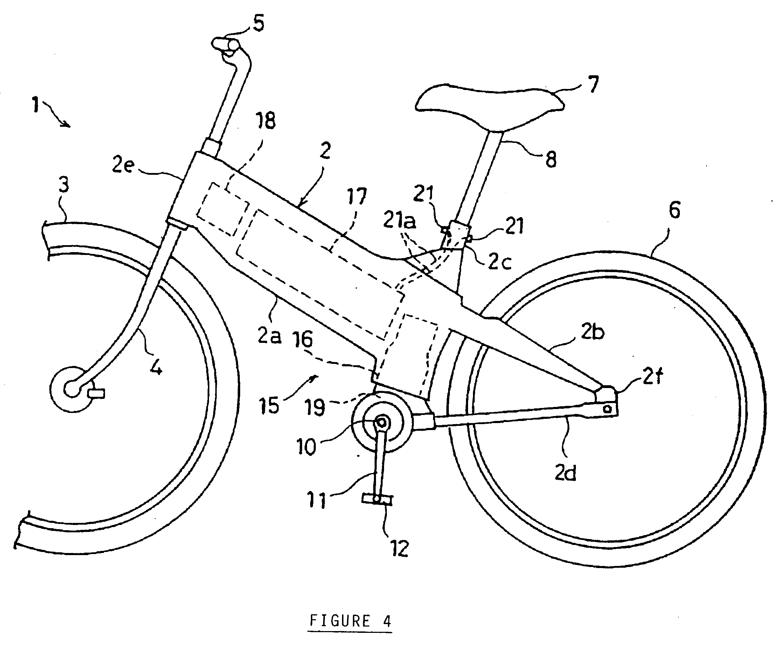

Figs. 1 through 4 are illustrations explanatory of a charging device for an electric bicycle according to one embodiment of the present invention. Fig. 1 is a plan view of the construction of the charging device, Fig. 2 is a perspective of the charging device, Fig. 3 is a schematic view showing the state of the charging device during use, and Fig. 4 is a side view of the electric bicycle.

Referring to Fig. 4, the reference numeral 1 designates an electric bicycle having a body frame 2 composed of a longitudinally extending main frame 2a of a nearly rectangular box-like form, a pair of left and right rear frames 2b each rearwardly extending from the main frame 2a, and a seat tube 2c upwardly extending from the main frame 2a. The main body 2a has a lower end connected by a chain stay 2d to a rear end of the rear frame 2b. The chain stay 2d is integrally connected to the rear frame 2b through a bracket 2f.

Rotatably received in a front end 2e of the main frame 2a is a front fork 4 to which a front wheel 3 is rotatably supported. The front fork 4 has an upper end to which a steering handle 5 is mounted. A rear wheel 6 is rotatably supported by the bracket 2f. A seat post 8 provided with a saddle 7 is received in the seat tube 2c such that the height thereof is adjusted at a desired level.

The main frame 2a has a lower end to which a crankshaft 10 is rotatably supported. The crankshaft 10 has both ends each provided with a pedal 12 through a crank 11. A chain is connected through a chain sprocket (not shown) to the crankshaft and is also connected to the rear wheel 6.

Mounted on the body frame 2 is a rear wheel driving device 15 which includes an electric motor for supplying an auxiliary driving force to the rear wheel 6, a battery 17 for supplying an electric source to the motor 16, and a controller 18 for controlling the driving force of the electric motor to a value corresponding to the pedaling force. The pedaling force on the pedals is combined with the auxiliary driving force from the electric motor 16 and the combined force is transmitted to the rear wheel 6 through the chain.

The controller 18 and the battery 17 are arranged within the main frame 2a along the longitudinal direction thereof, while the electric motor 16 is disposed in a rear portion of the main frame 2a with its output shaft being oriented downward. The output shaft (not shown) of the electric motor 16 is connected to the chain sprocket through a deceleration gearing mechanism 19.

The seat tube 2c of the body frame has an upper end on which positive and negative poles power receiving terminals 21 and 21 serving as a power receiving member constituting a power receiving side of a charging device 20 are provided.

The power receiving terminals 21 and 21 slightly protrude from the peripheral surface of the seat tube 2c and mounted on the tube 2c through an insulating member (not shown) interposed therebetween. Respective terminals 21 and 21 are electrically coupled with the charging terminals of the battery 17 through lead wires 21a and 21a.

Referring to Figs. 1 and 2, the charging device 20 has a charger 22 which constitutes a power supplying side thereof and which includes a rectangular parallelepiped charger main body 23 coupled to the electric source and a charging arm 24 connected to the charger main body 23 and having a generally V-like form as viewed on a plan view. The charger main body 23 is fixedly secured through a mounting bracket 25 to a vertical wall portion 26 of a parking area for the electric bicycle 1 at nearly the same level as those of the power receiving terminals 21 and 21 of the seat tube 2c. The parking area may be located at any desired place such as on a side of a house, in a barn or in a garden. The vertical wall may be substituted by a separately constructed stand. There are no specific limitations on the place and the wall.

Although not shown in the drawings, said grasping section 28 and said charging section or said supplying terminals 29 may be separated from each other.

The charging arm 24 has left and right arm sections 24a extending from a root section 24b which is pivoted through a supporting member 27 to left and right side surfaces 23a of the charger main body 23, so that the charging arm 24 is rotatable between a charging position where the arm 24 is oriented in substantially horizontal direction and an accommodated position where the arm 24 is oriented in substantially parallel with the vertical wall 26.

The charging arm 24 has a tip end provided with a concave grasping section 28 for grasping the seat tube 2c. Disposed on the grasping section 28 are opposing positive and negative poles power supplying terminals 29 and 29 serving as a power supplying member. Each of the power supplying terminals 29 is coupled to the charger main body through a lead wire 29a. Each of the power supplying terminals 29 is normally urged by a spring member (not shown) toward the inside of the concave portion so that the power receiving terminals and the power supplying terminals are automatically brought into electrical contact with each other when the seat tube 2c is grasped in the grasping section 28. At the same timer the seat tube 2c is mechanically fixed and supported in position by the charging arm 24.

A locking mechanism 30 is provided on the grasping section 28. The locking mechanism 30 has a construction in which a locking member 33 is fixed at a fixed position when displaced to a position shown by the solid line and is rotated to a position shown by the broken line when a key 31 is inserted into a key cylinder 32 for unlocking. By closing a mouth portion 28a of the grasping section 28 by the locking member 33, the seat tube 2c is locked. A lead wire 32a extends between the key cylinder 32 and a charger controlling device (not shown) which is built in the charger main body 23. The charger controlling device functions as means for charge initiation/stopping switching means and is construction so that when the locking member 33 is displaced to the locking position and a locking signal is inputted, the charging is started with the simultaneous lighting of a charging lamp 34, and upon receipt of a unlocking signal, the charging is stopped with the simultaneous extinguishment of the charging lamp 34. If desired, the charger controlling device may be provided with a further function for automatically stopping the charging after completion of the charging.

The function and effect of the present embodiment will be described next.

For charging the battery 17 of the electric bicycle 1 with the present embodiment, the bicycle is located adjacent to the charger 22 disposed in the parking area. The charging arm 24 is rotated to the horizontal, charging position to grasp the seat tube 2c by the grasping section 28 of the charging arm 24 (Fig. 3). Thus, the power supplying terminals 29 are brought into contact with and pushed to power receiving terminals 21 by the action of the biasing means, so that both terminals are automatically electrically coupled with each other. When the locking member 33 is rotated to the locking position to surround the seat tube 2c, the bicycle is mechanically fixed and supported. At the same time, the charging is started. In using the electrical bicycle, the key 31 is turned to open the mouth 28a by displacing the locking member 33 to the position (as shown by the broken line in Fig. 1). The charging operation is stopped simultaneously.

Thus, according to the charging device 20 of the present invention, since the charger 22 is installed in a parking area and since the power supplying terminals on the charger 22 side and the power receiving terminals 21 on the vehicle body side are electrically coupled with each other upon holding of the seat tube 2c with the charging arm 24 of the charger 22, the charging can be carried out by a simple operation requiring only the parking of the bicycle and the locking thereof without requiring a disturbing extension cord and without requiring troublesome battery attaching and detaching works. Further, during the charging, the vehicle body is held in the locked state, damages by felling can be prevented and theft and mischief can be prevented.

Further, since the power receiving terminals 21 are pushed by and sandwiched between the power supplying terminals 29, both the electrical connection and the mechanical support can be simultaneously achieved by holding of the seat tube 2c. The operation is thus made simple in this respect, too.

Furthermore, since the charging arm 21 is capable of being rotated between the charging position and the accommodating position, the charging arm can be positioned along the vertical wall 26 during the non-use stage. Thus, the charging arm does not make obstruction.

In addition, since in this embodiment the charging is initiated upon locking, theft and mischief can be prevented and the forgetting to charge can be avoided.

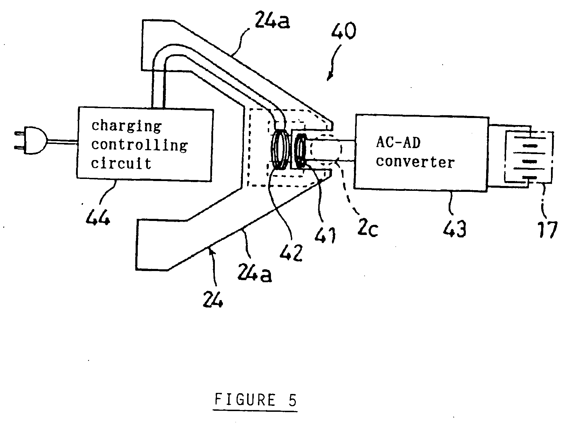

In the foregoing embodiment, the electrical connection is made by contact of the power receiving terminals 21 on the vehicle frame 2 with the power supplying terminals 29 on the charger 22. The electrical connection may be also accomplished by a non-contact structure as shown in Fig. 5. In the Figure, component parts corresponding to those of Fig. 1 have been designated by the same reference numerals.

Referring to Fig. 5, designated as 40 is a non-contact type charging device having a primary coil winding 42 on a power supplying side (power supplying coil) a secondary coil winding 41 on a power receiving side (power receiving coil) located at a position opposite the power supplying coil and spaced apart therefrom. The electric power is supplied by a magnetic coupling between both coils 41 and 42 from the power supplying coil 42 to the power receiving coil 41 without direct contact therebetween.

The power receiving coil 41 is disposed in a seat tube 2c and is connected to a battery 17 through an AC-DC converter 43, while the power supplying coil 42 is disposed in a grasping section 28 of a charging arm 24 and is connected to a power source though a charging controlling circuit 44.

In the non-contact type charging device 40, since the electric power is supplied by a magnetic coupling between the power receiving coil 41 on the vehicle frame side and the power supplying coil 42 on the charger side without direct contact therebetween, such charging failure due to rust or fouling that would be apt to be caused in the case of an electrical connection by direct contact, can be avoided.

In each of the foregoing embodiment, the description has been made on an example of an electric bicycle. The scope of the present invention is, however, not limited to such an application but may be applied to any electric vehicle which cannot be charged of and in itself during running. In the foregoing embodiments, the seat tube 2c is held. The portion to be held is not limited to this part. Any other portion, such as a handle post, may be held and the charging may be carried out using this handle post.

Thus, according to the present invention, since the charger main body is installed in a parking area for the electric vehicle, since the charging arm provided with the grasping section for holding the vehicle, and since the charging supplying member for supplying an electrical power to the power receiving member of the vehicle, both the electrical connection and the mechanical fixing can be simultaneously accomplished by mere holding of the vehicle with the charging arm while keeping the battery mounted on the vehicle. Further, the charging of the battery can be performed without requiring a disturbing extension cord and without requiring troublesome battery attaching and detaching works. Furthermore, an additional effect that damages by felling during the charging can be prevented may be obtained.

Further, since the power receiving terminal on the vehicle side may be mechanically engaged and electrically connected with the power receiving supplying terminal on the charger side when the vehicle is held, both the electrical connection and the mechanical fixing can be achieved simultaneously by a simple operation.

In addition, since the secondary coil winding on the power receiving side on the vehicle may be disposed opposite the coil winding on the power supplying side on the charger with a space being defined therebetween and, hence, the electric power is supplied by a magnetic coupling therebetween without direct contact therebetween, such connection failure due to rust or fouling that would be apt to be caused in the case of an electrical connection by direct contact, can be avoided.

Since the charging arm may be capable of being rotated between a substantially horizontal, charging position and a substantially vertical, accommodated position, the charging arm can be positioned at the vertical position during a non-use stage, so that the problem of obstacle by the charging arm can be avoided.

Still further, since the charging may be initiated when the locking mechanism is actuated to a locking state, theft or mischief can be prevented and the forgetting to perform the charging operation can be avoided.

## Claims

1. A charging device (20) for a battery (17) of an electrically driven two wheel vehicle, in particular an electrical power assisted bicycle (1), **characterized by** a stationary charger (22) having a grasping section (28) for holding said vehicle (1) and a charging section (29, 42) for charging said battery (17).

2. A charging device according to claim 1, **characterized in that** said grasping section (28) and said charging section (29, 42) being integral.

3. A charging device according to claim 1 or 2, **characterized in that** said charger (22) comprises a pivotably linked charging arm (24).

4. A charging device according to claim 3, **characterized in that** said charging arm (24) is pivotably linked to a charger main body (23) connected to a stationary mounting bracket (25).

5. A charging device according to at least one of claims 1 to 4, **characterized in that** said grasping section (28) is provided with a locking mechanism (30) for locking said vehicle (1) being held by said grasping section (28).

6. A charging device according to claim 5, **characterized in that** said locking mechanism (30) is associated with a switch for operating said charger (22).

7. A charging device according to at least one of claims 1 to 6, **characterized in that** said grasping section (30) defining said charging section by means of spring-biased terminals (29) adapted to contact respective power receiving terminals (21) of said vehicle.

8. A charging device according to at least one of claims 1 to 6, **characterized in that** said charger is a non-contact charging device (40).

9. A charging device according to claim 8, **characterized in that** said non-contact charging device (40) defines said charging section by means of a primary coil winding (42) located at said grasping section (28) adapted to cooperate with a secondary coil winding provided in a part of said vehicle (1) to be held by said grasping section (28).

10. A charging device according to at least one of claims 3 to 9, **characterized in that** said charging arm (24) is rotatable between a substantial vertical accommodating position and a substantial horizontal charging position.

11. A charging device according to at least one of claims 3 to 10, **characterized in that** said charging arm (24) comprises first and second arm sections (24a) extending from a root section (24b) being pivoted by a supporting member (27) to first and second side surfaces (23a) of a charger main body (23) connected to a fixed installed mounting bracket (25), and that said first and second arm sections (24a) are inclined towards each other and connected through said grasping section (28).
